# EUROPEAN PATENT APPLICATION

(11) **EP 0 782 917 A1**
(43) Date of publication of application: **09.07.1997**
(21) Application number: 96110988.1
(22) Date of filing: 08.07.1996
(51) Int. Cl.: B32B 21/08, E04G 9/05

(54) **Coated board of wood**

(30) Priority: 02.01.1996 IL 11665596
(71) Applicant: Taal Manufacturers of Plywood Kvuzath Mishmaroth Ltd., Pardes Hana 37100 (IL)
(72) Inventor: Shur, Eliezer, Ramat Tiberous, Tiberious 14290 (IL)
(74) Representative: Grünecker, Kinkeldey, Stockmair & Schwanhäusser Anwaltssozietät

(57) **Abstract**

A board of wood (2) coated with an elastic, thermoplastic film (6), the film (6) being heat-adhered to the wood without the use of a separate gluing substance, and having a thickness of less than 0.20 mm and a melting temperature of between 90°C and 150°C. Preferably, the thermoplastic film is coated with an external coating (8,10) comprising a thermoplastic material capable of adhering to the film, the coating having a melting temperature at least 20°C higher than the film and having properties desirable for the external facing of the board. The invention is especially useful with flexible plywood. Also disclosed are a process for manufacturing the coated board and a method of casting concrete in a curved shape using coated flexible plywood.

## Description

### FIELD OF THE INVENTION

The present invention relates to a board of wood coated with a thermoplastic material, and particularly to a flexible wooden board. The invention also relates to a process for the manufacture of such a board, and to applications of such a coated board.

### BACKGROUND OF THE INVENTION

Wood has a multitude of applications in the home as well as in industry. However, since wood is an organic substance, it is sensitive to environmental influences such as changes in the weather, humidity, water, solar radiation and biological pests. It is therefore often necessary to cover the wood with a protective facing which is resistant to damaging factors. Such a facing material can be in a liquid form, such as a paint or oil, or in a solid form, such as a film of phenolic resins or high pressure laminate (HPL). The solid facing is usually glued on to the surface of the wood.

One of the industrial applications of wood is in the preparation of a mold for the casting of concrete structures. A mold is built from wooden boards or beams in the desired shape, and the concrete is then poured into the mold. After the concrete has hardened, the boards are removed. The use of wood in this process, however, has several disadvantages: 1) the wood absorbs water from the concrete before it hardens, resulting in variations in the consistency of the concrete (water/cement ratio); 2) the surface of the board is not always smooth, resulting in an rough concrete surface; and 3) it is often difficult to remove the boards after hardening, and they frequently cannot be reused due to breakage and splintering. These drawbacks are usually overcome by coating the wood, as described above.

The above method of casting is suitable for structures having straight sides. However, if it is desired to cast a structure having curved sides, other, more expensive methods must generally be used. Recently, flexible plywood has become commercially available, and has been found to be well suited for non-linear casting of concrete. The plywood can be curved to form the desired shape of the mold, using appropriate support beams. Flexibility is a novel concept in the field of plywood, since until now plywood has always been rigid.

As previously stated, the plywood must be covered with a protective coating in order to avoid the disadvantages listed above. However, there has been no disclosure of coated, flexible plywood in the prior art. Furthermore, the facings currently available for use with rigid plywood are not suitable for use with a flexible base, and they either develop cracks due to their being bent along with the underlying plywood, or they interfere with the flexibility of the plywood due to their inherent lack of elasticity and/or the hardening properties of the glue used to attach the facing to the wood. A suitable facing for use with flexible wooden boards would therefore be useful.

### SUMMARY OF THE INVENTION

It is an object of the present invention to provide a board of wood coated by a flexible facing material.

It is a further object of the present invention to provide coated flexible plywood.

It is a still further object of the present invention to provide a method for manufacturing a coated wooden board.

It is another abject of the invention to provide a method of casting concrete structures having curved surfaces.

According to one aspect of the present invention, there is provided a board of wood coated with an elastic, thermoplastic film, the film being heat-adhered to the wood without the use of a separate gluing substance, and having a thickness of less than 0.20 mm and a melting temperature of between 90°C and 150°C.

In a preferred embodiment of the present invention, the board of wood is plywood, and most preferably, flexible plywood.

Further in accordance with this aspect of the present invention, the film is substantially impermeable to water and/or air, and is substantially stable to corrosive chemicals and/or UV radiation. The modulus of elasticity of the film is preferably in the range of 150 to 2500 MPa, and most preferably in the range of 300 to 1000 MPa. The melting temperature of the film is preferably in the range of 100°C to 140°C, and the thickness of the film is preferably less than 0.15 mm.

The board of the invention differs from the prior art coated wood in that no additional gluing substance is used to attach the film to the wood. Rather, the film is heat adhered directly onto the wood. This characteristic is especially advantageous with respect to flexible wooden boards, such as flexible plywood, since gluing substances usually harden within the glued surfaces, thereby significantly reducing their elasticity. Furthermore, the wood is coated with a thin layer of an elastic, thermoplastic material, thereby enhancing the flexibility of the coating.

In certain cases, the thermoplastic film may undesirably adhere to other surfaces with which it may come into contact. For example, during the coating process of the film onto the wood, the film may adhere to the metal surface of the press.

Furthermore, in many instances, it is desirable for the facing of the wooden board to have certain properties. It may be necessary for the board to be stable to UV radiation or corrosive chemicals, or to have a specific color or appearance. In the event that the coated board is used in a mold for concrete casting, it would be desirable to prevent adherence of the board to the surface of the concrete. If the thermoplastic film does not possess these desired properties, they can be imparted to the coated board by the addition of an additional external coating to the film.

Therefore, in a preferred embodiment of the invention, the film is further coated with an external coating having the following characteristics: (1) it is a thermoplastic material capable of adhering to the film; (2) it has a melting temperature at least 20°C higher than the film, so that when the film is hot-pressed onto the wood, the external coating remains solid; and (3) it has properties desirable for the external facing of the board. Preferably, the modulus of elasticity of the external coating is in the range of 150 to 2500 MPa.

Typical materials which can be used for the external coating include nylon, polyester, polyethylene including high density polyethylene (HDPE), polypropylene, polycarbonate, polymethyl meta-acrylate and engineering plastics. Most preferably, the melting temperature of the external layer is in the range of 160-200°C.

Preferably, one material which fulfills all of the above characteristics is used for the external coating, in which case the coating will consist of one layer. However, it is often difficult to find one material having all of the desired properties of the external coating. Additionally, even if such a material can be found, other reasons, such as cost or supply, may exist for reducing the amount of this material used in the coating to a minimum. In such cases, the external coating may consist of two or more layers, with the characteristics of the coating being distributed among the various layers. Thus, the lower layer must be capable of adhering to the thermoplastic film, while the upper layer must have a melting temperature at least 20 °C higher than the film as well as having properties desired for the external facing of the board. Generally, the external coating will consist of no more than two layers, in which case the coated film will then comprise three layers: 1) a lower thermoplastic film layer adhering to the wood; 2) an intervening lower layer of the external coating; and 3) an upper layer of the external coating serving as the outer facing layer. In all cases where the term "intervening layer" is used in this specification, the intention is to the lower layer of the external coating sandwiched in between the lower thermoplastic film and the upper external layer of the coating.

The coated board of the invention has a number of advantages over previously known coated boards. Since the facing is elastic, it can expand and contract with the underlaying wood, preventing the creation of straining forces between the facing and the wood which can cause delamination of the facing from the wood. Its stability to environmental changes increases its protective capabilities. Due to the elastic properties of the film, it is much less prone to developing cracks or breaks in its surface, thus insuring the continuity of the protective surface. This is important for the impermeability of the film to water, gases, liquid chemicals, etc. Finally, it can be used as a facing for flexible plywood in the casting of concrete structures, and especially curved structures. In order to reduce costs, the bulk of the thickness of the coated film can be made up by the intervening layer, which may consist of an inexpensive, elastic material.

According to another aspect of the present invention there is provided a process for manufacturing the coated board of the invention comprising hot-pressing an elastic, thermoplastic film onto a board of wood.

According to yet another aspect of the present invention, there is provided a method of casting a concrete structure comprising preparing a mold using the coated board of the invention, and pouring the concrete into the mold.

In a preferred aspect of this embodiment, the concrete structure is curved.

### BRIEF DESCRIPTION OF THE DRAWINGS

These and other aspects of the present invention will be better understood from the following detailed description of preferred embodiments, taken in conjunction with the following drawings in which:
Fig. 1 is an enlarged sectional side view of a coated board according to one embodiment of the invention;
Fig. 2 is a top view of a concrete casting mold prepared according to one embodiment of a method of the invention;
Fig. 3 is a sectional side view of the mold of Fig. 2 along line III--III; and
Fig. 4 is a perspective view of a second concrete casting mold according to the invention.

### DETAILED DESCRIPTION OF PREFERRED EMBODIMENTS

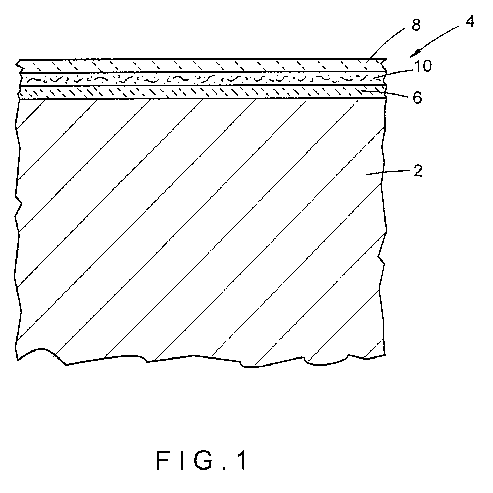

Reference is now made to Fig. 1 which illustrates a wooden board 2 coated with a facing in the form of a flexible coated film 4 according to one embodiment of the invention. The film 4 comprises three layers, a lower layer 6 (which is equivalent to the thermoplastic film described above) adjoining the board 2, an upper, external layer 8 facing the air, and an intervening layer 10 positioned between the upper and lower layers.

The lower layer 6 comprises an elastic thermoplastic material which, on heating, adheres to the surface of the wooden board. Preferably, the thermoplastic material is a polyolefin or polyolefin co- or ter- polymer. Examples of such polyolefin materials include low density polyethylene (LDPE), ethyl-vinyl acetate co-polymer (EVA), maleic anhydride grafted LDPE (MA-g-LDPE), maleic anhydride grafted EVA (MA-g-EVA), etc.

In a most preferred aspect of the invention, the lower layer consists of MA-g-EVA.

The melting temperature of the thermoplastic material is preferably between 90°C and 150°C, and most preferably between 100°C and 140°C. This allows the material to remain in the solid phase even when in contact with high temperatures (such as boiling water), and further allows the material to be hot-pressed onto the wood without singeing it.

The composition of each of the intervening 10 and upper 8 layers, which comprise the external coating of the lower layer 6, is dependent on the materials used in the various layers.

The upper layer 8 is the external layer of the coated board, and as such must comprise an elastic material having the properties which are desired to be imparted to the surface of the wood such as, for example, impermeability to moisture, stability to UV radiation and corrosive chemicals, or prevention of adherence to concrete. In addition, the melting temperature must be at least 20°C higher than that of the material of the lower layer 6. Such materials include, for example, nylon, polyester, polyethylene including HDPE, polypropylene, polycarbonate, polymethyl meta-acrylate, and other engineering plastics.

In general, the same range of materials listed above with respect to the upper layer 8 are suitable to be used in the intervening layer 10. However, the main characteristic required of the intervening layer is that it be capable of adhering both to the thermoplastic film of the lower layer 6 as well as to the upper layer. Its melting temperature, therefore, does not necessarily have to be at least 20°C higher than that of the material of the lower layer, nor does it have to have specific properties for the wood facing.

In a most preferred embodiment of the invention, the upper layer consists of nylon, and the intervening layer consists of HDPE.

In the event that only one type of material is used in the external coating (in which case the coating will consist of only one layer), it will be similar to the material of the upper layer.

Another factor which contributes to the flexibility of the coating film is the thickness of the film. Whereas the thickness of conventional coatings can range up to 1.5 mm, the thickness of the film used in the invention is usually no more than 0.30 mm. Preferably, the thickness of the film is in the range of 0.03-0.15 mm. Most preferably, the film is approximately 0.08mm thick. These dimensions apply both to the uncoated film as well as to the film coated with an external layer(s).

In the illustrated embodiment, each of the layers 6, 8 and 10 comprise 15-45% of the total thickness of the coated film. In a preferred embodiment, each layer comprises a third of the total thickness. However, if the intervening layer is inserted due to economical considerations, for example when the upper layer comprises an expensive material, the upper and lower layers will usually comprise 15-20% of the total thickness, with the remaining 60-70% made up by the intervening layer.

The flexibility of the film is due to the relevant mechanical properties characteristic of the thermoplastic materials used in its manufacture - i.e. low modulus of elasticity and high elongation at break (relative to thermosetting or solvent based materials):
- The modulus of elasticity of the flexible film of the invention generally ranges from 150 to 2500 MPa (preferably 300 to 1000 MPa), while that of a thermoset resin is typically higher than 5000 MPa;
- The elongation at break of the film of the invention usually ranges from 100 to 750% (typically 200 to 350%), while that of a thermoset resin is less than 7% and that of a solvent based coating can be estimated to be less than 10% when applied onto the surface of wood.

The preferred manufacturing method for a three-layered film is three-layered blown film co-extrusion.

Any species of wood can be used in the invention. These include, but are not restricted to, okoume, birch, beech, ozigo, poplar, cieba, etc. The last two species of wood are often used in the production of flexible plywood. The thermoplastic film can be coated on hardboard, particle board (chipboard), MDF (medium density fibers) and plywood. In a preferred embodiment, the film is coated onto flexible plywood, where its advantages are maximally exploited.

The adherence of the film to the wood is carried out by a hot-pressing process using a press combined with a heating and cooling system.

The film is first laid out on the surface of the wooden board. In a preferred embodiment of the coating process, the film is pressed onto the wood with a pressure of 3-15 kg/cm² and at a temperature of approximately 110-140°C for at least one minute. While maintaining the pressure, the temperature is reduced to approximately 50-90°C, after which the pressure is released and the coated board is removed.

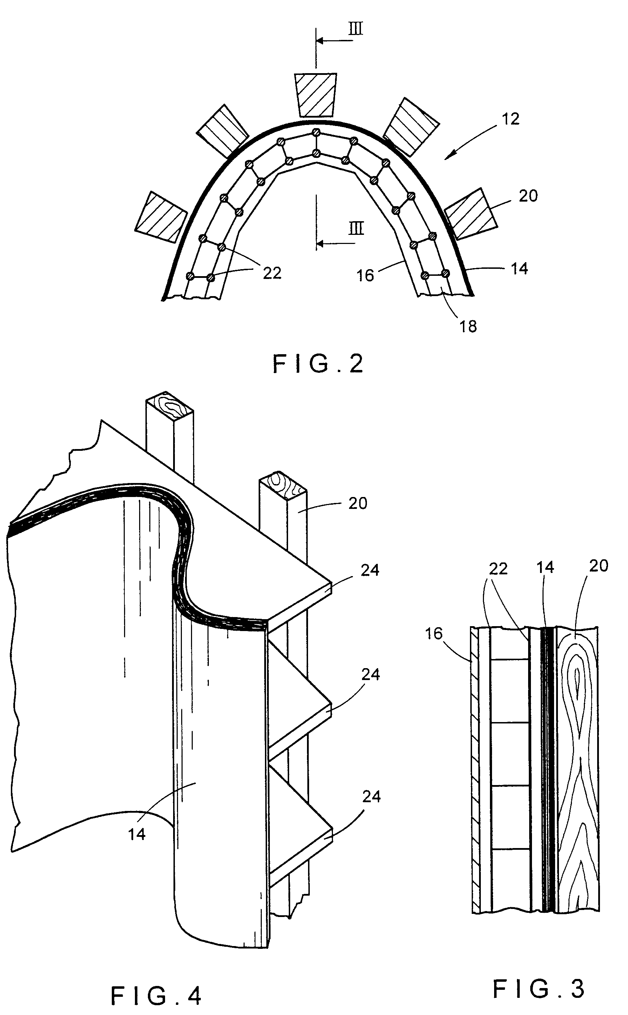

One example of an application of the coated board of the invention is illustrated in Figs. 2-4. A section of a mold for casting a circular concrete structure is illustrated in Figs. 2 and 3. The mold is formed on its outer side by a coated flexible plywood board 14 which is bent to the desired shape of the structure, and on its inner side by a coated flexible plywood board 16. The flexible facings of the boards 14 and 16 face the inside 18 of the mold. Support beams 20 support the board on its outer side, and metal bars 22 are placed inside the mold to strengthen the concrete, as is well known.

Once the mold is in place, the concrete is poured into the mold and allowed to dry and harden. The flexible board is then removed without sticking to the cement, leaving behind a smooth concrete surface. The coated board can be reused numerous times.

In casting experiments carried out with a preferred embodiment of the board of the invention, no significant damage to the coating was noticed, nor was there any penetration of moisture through the coating, from the concrete into the plywood. The board was found to be reusable.

Fig. 4 illustrates another type of shaped casting mold which can be built using the coated flexible board of the invention. The board 14 easily assumes the curved shape of the shaped mold plates 24, thus allowing the casting of almost any shape desired simply and cheaply.

While the present invention has been described in terms of several preferred embodiments, it is expected that various modifications and improvements will occur to those skilled in the art upon consideration of this disclosure.

The scope of the invention is not to be construed as limited by the illustrative embodiments set forth herein, but is to be determined in accordance with the appended claims.

## Claims

1. A board of wood (2) coated with an elastic, thermoplastic film (6), said film (6) being heat-adhered to the wood without the use of a separate gluing substance, said film (6) having a thickness of less than 0.30 mm and a melting temperature of between 90°C and 150°C.

2. A board of wood according to claim 1 wherein said film is substantially impermeable to water and/or air.

3. A board of wood according to either of claims 1 or 2 wherein said film is substantially stable to corrosive chemicals and/or UV radiation.

4. A board of wood according to any of claims 1-3 wherein said film has a modulus of elasticity in the range of 150 to 2500 MPa.

5. A board of wood according to any of claims 1-4 which is plywood.

6. A board of wood according to claim 5 which is flexible plywood.

7. A board of wood according to any of claims 1-6 wherein said film comprises one or more thermoplastic materials selected from the group comprising polyolefins and polyolefin co- or ter- polymers.

8. A board of wood according to claim 7 wherein said film comprises maleic anhydride grafted ethyl-vinyl acetate co-polymer (MA-g-EVA).

9. A board of wood according to any of claims 1-8 wherein said film is coated with an external coating (8,10) comprising a thermoplastic material capable of adhering to said film, said coating having a melting temperature at least 20°C higher than said film and having properties desirable for the external facing of said board.

10. A board of wood according to claim 9 wherein said external coating is selected from the group comprising nylon, polyester, polyethylene including high density polyethylene (HDPE), polypropylene, polycarbonate, polymethyl meta-acrylate and engineering plastics.

11. A process for manufacturing the board of any of claims 1-10 comprising hot-pressing an elastic, thermoplastic film onto said board of wood.

12. A method of casting a concrete structure comprising
(**i**) preparing a mold (12) in the desired shape of the structure using the board (14,16) of any of claims 1-10; and
(**ii**) pouring the concrete into the mold.

13. A method of casting concrete in a curved shape according to claim 12.
